(19) Europäisches Patentamt
European Patent Office
Office européen des brevets

(11) **EP 2 578 978 A1**

(12) **EUROPÄISCHE PATENTANMELDUNG**

(43) Veröffentlichungstag:
**10.04.2013 Patentblatt 2013/15**

(51) Int Cl.:
*F28D 17/00* (2006.01)    *F28D 20/00* (2006.01)

(21) Anmeldenummer: **11184256.3**

(22) Anmeldetag: **07.10.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Ed. Züblin AG**
**70567 Stuttgart (DE)**

(72) Erfinder:
• **Dr. Mayer, Peter-Michael**
**70192 Stuttgart (DE)**
• **Dr. Niklasch, Christoph**
**71139 Ehningen (DE)**

(54) **Wärmespeicher und Verfahren zu dessen Betrieb**

(57)      Es werden ein Wärmespeicher (33) und ein Verfahren zu dessen Betrieb beschrieben. Der Wärmespeicher (33) umfasst in einem Wärmespeicherraum (23) beherbergte, Temperaturwechseln unterzogene Wärmespeichermittel (22), welche zumindest zeitweilig von einem die Wärmezufuhr zum und die Wärmeentnahme aus dem Wärmespeicher (33) besorgenden Arbeitsfluid (27) durchströmt sind. Die Wärmespeichermittel (22) umfassen eine Schüttung (24) mit aneinander berührenden Schüttungselementen (25). Die Schüttung (24) weist zwischen den einander berührenden Schüttungselementen (25) miteinander kommunizierende, durchgehende Poren (26) auf, welche zumindest zeitweilig von dem Arbeitsfluid (27) durchströmt sind. Der Wärmespeicher (33) umfasst zumindest auf einen Teil der Schüttung (24) einwirkende, durch eine mechanische Krafteinwirkung zumindest einen Teil der Schüttungselemente (25) gezielt in Bewegung relativ zueinander versetzende und in der Schüttung (24) verschiebende Auflockerungsmittel (40). Das Verfahren zum Betrieb eines solchen Wärmespeichers (33) sieht eine zumindest zeitweilige mechanische Auflockerung der Wärmespeichermittel (22) im Wärmespeicherraum (23) vor, indem durch eine mechanische Krafteinwirkung zumindest einen Teil der Schüttungselemente (25) gezielt in Bewegung relativ zueinander versetzt und in der Schüttung (24) verschoben werden.

Fig. 2

**Beschreibung**

Technisches Gebiet

Die Erfindung betrifft ein Verfahren zum Betrieb eines in einem Wärmespeicherraum Temperaturwechseln unterworfene Wärmespeichermittel beherbergenden Wärmespeichers gemäß dem Oberbegriff des Anspruchs 1 und einen zur Durchführung eines solchen Verfahrens geeigneten Wärmespeicher gemäß dem Oberbegriff des Anspruchs 8.

Stand der Technik

Allgemein werden Energiespeicher benötigt, beispielsweise um momentan überschüssige Energie z.B. in Form von Wärme und/oder mechanischer Energie und/oder potentieller Energie und/oder chemischer Energie zwischenzuspeichern.

Solche Energiespeicher können unmittelbar in Kraftwerken und/oder in Verbindung mit diskontinuierlich zur Verfügung stehenden Energiequellen und/oder in Verbindung mit diskontinuierlich Energie verbrauchenden Energiesenken vorgesehen sein, insbesondere in regenerative Energiequellen nutzenden Kraftwerken, um zumindest zeitweilig überschüssige Energie bis zu deren Bedarf zwischenzuspeichern.

So können beispielsweise in solarthermischen und/oder solardynamischen Kraftwerken als Wärmespeicher ausgeführte Energiespeicher vorgesehen sein, welche bei hoher Sonneneinstrahlung und/oder geringer Wärme und/oder Stromabnahme momentan überschüssige Energie in Form von Wärme speichern.

Beispielsweise um wetterabhängige regenerative Energiequellen, wie etwa Windkraft und/oder Solarenenergie, zur Spitzenlast- und/oder Mittellast- und/oder Grundlast-Stromversorgung vorzusehen, sind darüber hinaus Speicherkraftwerke bekannt, welche momentan überschüssige Energie, wie etwa die Energie von während günstiger Wetterbedingungen gegenüber dem Stromverbrauch zuviel produzierten Stroms zum Ausgleich während ungünstiger Wetterbedingungen gegenüber dem Stromverbrauch zuwenig produzierten Stroms speichern können. Dabei kann auch längerfristig vorgesehen sein Energiemengen vorzuhalten, die beispielsweise Nachfrageunterschiede zwischen Sommer und Winter ausgleichen können.

Eingangs erwähnte Energiespeicher können in Form von Speicherkraftwerken ausgeführt sein oder ein oder mehrere Teile eines Speicherkraftwerks bilden, beispielsweise um die Energie von während Zeiten geringen Stromverbrauchs zuviel produzierten Stroms zumindest so lange zwischenzuspeichern, bis der Stromverbrauch den momentan erzeugten Strom zu übersteigen droht.

Ein Druckluftspeicherkraftwerk ist ein Beispiel für ein solches Speicherkraftwerk.

Im Unterschied zu einem für den gleichen Einsatzzweck entwickelten Pumpspeicherkraftwerk, bei dem zu Schwachlastzeiten in einen hoch gelegenen Speichersee gepumptes Wasser über Fallrohre nach unten fließt und dabei mittels einer oder mehrerer Turbinen einen oder mehrere Generatoren antreibt, nutzt ein Druckluftspeicherkraftwerk die Energie, die in verdichteter bzw. komprimierter Luft steckt. In Schwachlastzeiten wird hierbei mit einem elektrisch angetriebenen Verdichter Luft verdichtet und in einem Druckluftspeicher gespeichert, beispielsweise in einer unterirdischen Kaverne oder Mine. In Zeiten z.B. hoher Stromnachfrage, wie etwa bei Spitzenlast, wird die Druckluft aus dem Druckluftspeicher entnommen und in einer Turbine entspannt, die ihre Leistung an einen gekoppelten Generator abgibt.

Der Druckspeicher des Druckluftspeicherkraftwerks stellt hierbei wie der Speichersee des Pumpspeicherkraftwerks einen Energiespeicher zur Zwischenspeicherung momentan überschüssiger Energie in Form von potentieller Energie dar.

Dabei stellt ein Druckluftspeicherkraftwerk kein Kraftwerk im herkömmlichen Sinne dar, da bei der Verdichtung der Luft mehr Energie aufgewandt werden muss, als bei deren Entspannung wieder entnommen werden kann. Ein Druckluftspeicherkraftwerk ist demnach vielmehr ein aus einem oder mehreren Druckluftspeichern bestehenden Energiespeicher und angeschlossener Turbine und Generator zur Bereitstellung elektrischen Stroms zu Zeiten der Spitzenlast.

Bekannte Probleme von Druckluftspeicherkraftwerken sind deren eingeschränkter Gesamtwirkungsgrad bedingt einerseits durch hohe Verluste aufgrund beabsichtigter und unbeabsichtigter Wärmeabgabe bei der Erzeugung und Speicherung der Druckluft sowie andererseits durch gegebenenfalls vorgesehene, der Gefahr einer Vereisung der Turbine bei der Entspannung der Druckluft entgegnwirkender konventioneller Maßnahmen. Die Gründe hierfür sind folgende:

- Die Verdichtung bzw. Kompression der Luft führt zu einer Erhöhung deren Temperatur. Näherungsweise kann hierbei von einer adiabatischen Zustandsänderung ausgegangen werden, bei der die vom Verdichter an der Luft verrichtete Arbeit direkt die innere Energie der Luft und damit deren Temperatur erhöht. Hierbei können je nach thermodynamischem Ausgangszustand der Luft, Verdichterleistung und Gesamtdruckverhältnis aller Stufen des Verdichters Temperaturen von weit über 1000°C erreicht werden. Um die Komponenten der Anlage vor diesen Temperaturen zu schützen ist bekannt, die Temperatur der verdichteten Luft über beispielsweise kühlmitteldurchströmte Wärmetauscher an die Umgebung abzugeben.

- Abhängig von der Dauer des Verbleibs der verdichteten Luft bis zu deren Wiederentnahme im Druckluftspeicher findet eine Abgabe eines Teils der Wärme über die Wandungen des Druckluftspeichers an die Umgebung statt. Ist der Druckluftspeicher beispielsweise eine Kaverne oder eine Mine wird die Wärme an das umgebende Mineral bzw. Gestein abgegeben.

- Die Luft kühlt bei der Expansion in der Turbine stark ab. Hierdurch kann in der Luft enthaltene Restfeuchtigkeit gefrieren und die Turbine vereisen. Um dies zu verhindern muss die Luft vor oder während der Entspannung erwärmt werden, beispielsweise durch konventionelles Zuheizen mittels eines Brennstoffs, wie etwa Erdgas. Hierbei wird der Brennstoff der Luft bei deren Entnahme aus dem Druckluftspeicher beigemengt. Das Brennstoff-Luft-Gemisch wird anschließend vor dem Eintritt in eine Gasturbine entzündet, welche den Generator antreibt.

Zur Verbesserung des Gesamtwirkungsgrads von Druckluftspeicherkraftwerken ist bekannt, die Restwärme der der Gasturbine entweichenden Abgase mittels eines Rekuperators der aus dem Druckluftspeicher entnommenen Luft noch vor deren Eintritt in die Gasturbine zuzuführen. Hierdurch wird zumindest der Brennwert des Brennstoff-Luft-Gemischs besser ausgeschöpft.

Darüber hinaus sind so genannte adiabatische Druckluftspeicherkraftwerke bekannt, bei denen zumindest zum Teil die bei der Verdichtung der Luft erzeugte Wärme unter Abkühlung der verdichteten Luft bei deren Zufuhr zum Druckluftspeicher einem Wärmespeicher zugeführt wird und der Wärmespeicher bei der Entnahme der Druckluft aus dem Druckluftspeicher wieder entladen wird, indem die in dem Wärmespeicher gespeicherte Wärme der unter Entspannung durch die Turbine strömenden Luft wieder zugeführt wird. Bei der Entnahme aus dem Druckluftspeicher durchströmt die komprimierte Luft hierbei den Wärmespeicher, erhitzt sich und gelangt erst dann in die Turbine. Dadurch wird weniger oder idealerweise kein Brennstoff zur Erwärmung der Luft benötigt. Während der Expansion in der Turbine kühlt die Luft auf Umgebungstemperatur ab. Ein adiabatisches Druckluftspeicherkraftwerk erreicht so im Vergleich zu einem zuvor beschriebenen Druckluftspeicherkraftwerk mit Gasturbine einen höheren Wirkungsgrad. Entgegen ihrer Bezeichnung führen adiabatische Druckluftspeicherkraftwerke jedoch keine adiabatischen Zustandsänderungen aus, sie kommen durch die Rückführung der bei der Verdichtung erzeugten Wärme an die aus dem Druckluftspeicher entnommene Luft dem Wirkungsgrad adiabatischer Zustandsänderungen lediglich näher.

Ein adiabatisches Druckluftspeicherkraftwerk verfügt dabei über wenigstens zwei eingangs erwähnte Energiespeicher. Ein erster zur Speicherung potentieller Energie vorgesehener Energiespeicher umfasst den beispielsweise durch eine oder mehrere Kavernen zur Aufnahme und Speicherung von unter Druck stehender Luft gebildeten Druckluftspeicher. Ein zweiter, zur Speicherung von Energie in Form von Wärme vorgesehener Energiespeicher umfasst wenigstens einen Wärmespeicher.

Damit ein Wärmespeicher seine Wärmespeicherfunktion erfüllen kann, weist dieser beispielsweise in einem beispielsweise durch einen Behälterinnenraum gebildeten Wärmespeicherraum beherbergte Wärmespeichermittel auf. Die Wärmespeichermittel sind in der Lage, einem Arbeitsfluid Wärme zu entnehmen, die Wärme über einen bestimmten Zeitraum hinweg zu speichern und anschließend beispielsweise dem selben Arbeitsfluid wieder zuzuführen. Dabei wird den Wärmespeichermitteln zunächst vermittels des Arbeitsfluids Wärme zugeführt, welche anschließend von den Wärmespeichermitteln möglichst verlustarm gespeichert wird, um zumindest einen Teil der gespeicherte Wärme den Wärmespeichermitteln bei Bedarf vermittels des Arbeitsfluids wieder zu entziehen.

Die Wärmespeichermittel können derart ausgebildet sein, dass sie unmittelbar von dem die Wärmezufuhr zum Wärmespeicher und die Wärmeentnahme aus dem Wärmespeicher besorgenden Arbeitsfluid durchströmt sind. Bei dem Arbeitsfluid kann es sich beispielsweise direkt um die unter Druck stehende Luft eines Druckluftspeicherkraftwerks handeln.

Hierzu können die Wärmespeichermittel in einem durch einen Behälterinnenraum eines auch als Containment bezeichneten Druckbehälters gebildeten Wärmespeicherraum untergebracht sein.

Durch EP 1 857 614 A2 ist ein als ein Wärmespeicher für ein adiabatisches Druckluftspeicherkraftwerk ausgeführter und für diesen Zweck Wärmespeichermittel beherbergender Druckbehälter bekannt. Dieser Wärmespeicher weist einen durch einen von dem Druckbehälter umschlossenen Behälterinnenraum gebildeten Wärmespeicherraum auf, in welchem die Wärmespeichermittel untergebracht sind. Zur Zufuhr und zur Entnahme von Wärme kann der Wärmespeicherraum von einem durch einer Kaverne von einem Verdichter oder einer Turbine von der Kaverne zuzuführende Druckluft gebildeten Arbeitsfluid durchströmt werden. Der Druckbehälter dieses Wärmespeichers weist einen vorgespannten Betonmantel aus hochfestem Beton mit Stahlkappe auf. Die Vorspannung erfolgt horizontal und vertikal bevorzugt durch Spannglieder aus Kohlefasern. Eine hitzebeständige Schicht und eine erste thermisch isolierende Schicht trennen die Wärmespeichermittel vom temperaturempfindlicheren Beton. Zwischen der ersten thermisch isolierenden Schicht und dem Betonmantel bzw. der Stahlkappe kann sich darüber hinaus noch eine zweite thermisch isolierende Schicht befinden, falls die erste thermisch isolierende Schicht nicht selbst in ausreichendem Maße thermisch isolierend wirkt. Bei der zweiten thermisch isolierenden Schicht kann es sich um eine Luftschicht handeln. Zur Kühlung der Innenseite des Betonmantels kann darüber hinaus in dem Betonmantel auch noch ein Kühlmittelkreislauf vorgesehen sein. Bei dem verwendeten Kühlmittel handelt es sich bevorzugt um Wasser. Die Wärmespeichermittel bestehen aus Formsteinen aus einem keramischen Material. Die Formsteine weisen Durchführungen in Form von Strömungskanalabschnitten für die unter Druck stehende Luft auf.

Die Wärmespeichermittel haben wegen der Änderung deren Volumens bei Temperaturwechseln keinen direkten Kontakt zu dem den Behälterinnenraum umgebenden Betonmantel und auch nicht zu den die Wärmespeichermittel vom temperaturempfindlicheren Beton trennenden hitzebeständigen und thermisch isolierenden Schichten. Damit die ständigen Temperaturzyklen nicht zu einer Verschiebung der Formsteine und deren Strömungskanalabschnitte relativ zueinander führen, können die Formsteine mit Nut und Feder versehen sein, mit denen sie ineinander greifen.

Nachteilig an den Wärmespeichermitteln dieses Wärmespeichers ist deren hoher Herstellungsaufwand sowie dessen nicht zufrieden stellende Nutzung eines zur Verfügung stehenden begrenzten Bauraums, beispielsweise eines von einem Druckbehälter umschlossenen und einen Wärmespeicherraum bildenden Behälterinnenraums. Der hohe Herstellungsaufwand ist unter anderem bedingt durch die in den aus Formsteinen hergestellten Wärmespeichermitteln vorzusehenden und für die zur Durchströmung mit dem Arbeitsfluid bzw. der Druckluft vorgesehenen Strömungskanäle sowie durch den hohen Aufwand beim Einbringen und Zusammensetzen der Formsteine, wo darauf geachtet werden muss, dass die in den einzelnen Formsteinen vorgesehenen Strömungskanalabschnitte möglichst stoß- und versatzfrei ineinander übergehen, um Durchströmungsverluste so gering wie nur möglich zu halten. Die nicht zufrieden stellende Nutzung des zur Verfügung stehenden begrenzten Bauraums ist unter Anderem darauf zurückzuführen, dass zwischen den Wärmespeichermitteln und den Bauraum umgebenden Wandungen ein Abstand einzuhalten ist, um die durch die Wärmeausdehnung bei unterschiedlichen Betriebstemperaturen verursachten Volumenschwankungen der Wärmespeichermittel auszugleichen. Stünden die Wärmespeichermittel aus Formstein unmittelbar mit den Wandungen in Kontakt käme es aufgrund der zyklischen Volumenschwankungen nach und nach zu einer Zerstörung der Wärmespeichermittel einhergehend mit einer Verdichtung des dadurch entstehenden Schutts, was dann auf Dauer zu einer Zerstörung der umgebenden Wandungen führen würde.

Durch WO 2010/060524 A1 ist eine Schüttung bzw. ein Haufwerk mit einander berührenden Schüttungs- bzw. Haufwerkelementen als Wärmespeichermittel bekannt. Zwischen den einander berührenden Schüttungselementen weist die Schüttung miteinander kommunizierende, durchgehende Poren auf, welche zumindest zeitweilig von einem Wärmeübertragungsfluid durchströmt werden können.

Die Schüttung ist zwar kostengünstig herstellbar, leidet aber unter folgenden Nachteilen: Die zur Durchströmung durch das Wärmeübertragungsfluid vorgesehenen durchgehenden Poren der Schüttung werden durch allmählich aus sich wegen unterschiedlicher Wärmeausdehnungen bei aufeinander folgenden Temperaturwechseln gegenseitig vollständig oder teilweise zerstörenden Schüttungselementen entstehendem Schutt zugesetzt. Alternativ oder zusätzlich kann der sich in der Schüttung aufbauende und zwischen der Schüttung und den Wandungen eines die Schüttung beherbergenden Wärmespeicherraums wirkende Horizontaldruck höher steigen, als der hydrostatische Druck in einer in ihrer Dichte der mittleren Dichte der Schüttung entsprechenden Flüssigkeit in einer Tiefe, die der Gesamthöhe der Schüttung entspricht. Hierdurch können im Laufe aufeinander folgender Temperaturzyklen die Wandungen des die Schüttung beherbergenden Wärmespeicherraums beschädigt und/oder zur Wärmeisolation zwischen diesen Wandungen und der Schüttung angeordnete Isolationsmittel zerstört werden, wodurch ein mit solchen Wärmespeichermitteln ausgeführter Wärmespeicher eine nur begrenzte Langzeitstabilität aufweist. Sowohl für die gegenseitige Zerstörung der Schüttungselemente, als auch für die Zerstörung der Wärmeisolation und/oder der Beschädigung der Wandungen des Wärmespeicherraums ist ein sowohl zwischen den Schüttungselementen untereinander, als auch zwischen den Schüttungselementen und der Wandungen des Wärmespeicherraums wirkender, über einen vom Material und der Beschaffenheit der Schüttungselemente, der Isolationsmittel der Wärmeisolation und den Wandungen abhängigen Druck hinausgehender kritischer Horizontaldruck in der Schüttung maßgeblich verantwortlich.

Aufgabe der Erfindung

Der Erfindung liegt die Aufgabe zugrunde, ein Verfahren zum Betrieb eines in einem Wärmespeicherraum Temperaturwechseln unterworfene Wärmespeichermittel beherbergenden Wärmespeichers und einen Wärmespeicher zur Durchführung eines solchen Verfahrens zu entwickeln, welche ausgehend vom Stand der Technik einen überschaubaren Herstellungsaufwand mit einer verbesserten Bauraumnutzung einhergehend mit einer verbesserten Langzeitstabilität aufweisen.

Darstellung der Erfindung

Die Aufgabe wird gelöst durch ein Verfahren mit den Merkmalen des Anspruchs 1 bzw. durch einen zur Durchführung des Verfahrens geeigneten Wärmespeicher mit den Merkmalen des Anspruchs 8.

Ein erster Gegenstand der Erfindung betrifft demnach ein Verfahren zum Betrieb eines in einem Wärmespeicherraum Temperaturwechseln unterworfene Wärmespeichermittel beherbergenden Wärmespeichers.

Die Wärmespeichermittel sind dabei zum Austausch von Wärme mit einem den Wärmespeicherraum zumindest zeitweilig durchströmenden Arbeitsfluid sowie zur wenigstens zeitweiligen Speicherung der Wärme von deren Zufuhr bis zu deren Entnahme durch das Arbeitsfluid vorgesehen.

Die Wärmespeichermittel sind bevorzugt derart ausgebildet, dass sie vorzugsweise unmittelbar zumindest zeitweilig von dem die Wärmezufuhr und die Wärmeentnahme besorgenden Arbeitsfluid durchströmt werden können.

Die Wärmespeichermittel umfassen eine Schüttung bzw. ein Haufwerk mit einander berührenden Schüttungs- bzw. Haufwerkelementen. Zwischen den einander berührenden Schüttungselementen weist die Schüttung miteinander kommunizierende, durchgehende Poren auf, welche zumindest zeitweilig von dem Arbeitsfluid durchströmt werden können.

Damit einem Verdichten der Schüttung und/oder einem gegenseitigen Verkeilen der Schüttungselemente einhergehend mit dem Aufbau eines kritischen Horizontaldrucks bei aufeinander folgenden Wärmeausdehnungen und -schrumpfungen aufgrund von aufeinander folgenden Temperaturzyklen vorgebeugt wird, sieht das Verfahren vor, die Wärmespeichermittel im Wärmespeicherraum zumindest zeitweilig mechanisch aufzulockern, beispielsweise indem mindestens ein Teil der Schüttung, vorzugsweise mindestens ein am Boden des Wärmespeicherraums befindlicher bzw. auf diesem liegender Teil der Schüttung, mechanisch angehoben wird. Vorzugsweise wird dabei ein verbleibender Teil der Schüttung nicht mit angehoben.

Hierdurch wird eine erneute Bewegungsmöglichkeit der Schüttungselemente untereinander geschaffen, wodurch diese an einem gegenseitigen Verkeilen und einer gegenseitigen Zerstörung gehindert werden. Darüber hinaus wird so ein durch gegenseitiges Verkeilen der Schüttungselemente insbesondere im unteren Teil der Schüttung entstehender Horizontaldruck abgebaut, welcher wenn dieser nicht abgebaut wird, durch eine immer höhere Anzahl an bei geringen Temperaturniveaus nach unten wandernder Schüttungselemente bei anschließenden hohen Temperaturniveaus ansonsten immer stärker ansteigen würde, und im Laufe aufeinander folgender Temperaturzyklen den kritischen Horizontaldruck übersteigen würde und so zu einer Beschädigung der Wandungen des die Schüttung beherbergenden Wärmespeicherraums und/oder zur Zerstörung von zur Wärmeisolation zwischen diesen Wandungen und der Schüttung angeordneten Isolationsmitteln führen würde.

Während der mechanischen Auflockerung verbleibt die Schüttung in dem Wärmespeicherraum. Demnach ist vorgesehen, dass die Schüttung zu deren Auflockerung dem Wärmespeicherraum nicht entnommen und zu einem späteren Zeitpunkt oder zeitgleich in der selben oder einer anderen Zusammensetzung dem Wärmespeicherraum wieder zugeführt wird. Vielmehr sieht die mechanische Auflockerung vor, Schüttungselemente der Schüttung durch von außen angeregte mechanische Krafteinwirkung gezielt in Bewegung relativ zueinander zu versetzen und einzelne oder mehrere Schüttungselemente in der Schüttung zu verschieben. Hierdurch werden Spannungen und Drücke in der Schüttung abgebaut, welche durch ein Nachrücken von Schüttungselementen aus oberen Schichten in untere Schichten der Schüttung bei aufeinander folgenden Temperaturzyklen durch abwechselnde Volumenvergrößerungen und -verkleinerungen der Schüttungselemente entstehen.

Durch das mechanische Auflockern der Schüttung zumindest im Bereich des Bodens des Wärmespeicherraums kann ein sich allmählich aufbauender Horizontaldruck erst gar nicht entstehen, oder, sofern durch die beschriebenen Mechanismen ein geringer Horizontaldruck aufgebaut sein sollte, beispielsweise bevor die Schüttung z.B. zyklisch wieder aufgelockert wird, wird dieser sofort abgebaut, wodurch keine Gefahr besteht, dass der kritische Horizontaldruck überstiegen wird. Hierdurch weist ein mit einem solchen Verfahren betriebener Wärmespeicher mit eine Schüttung umfassenden Wärmespeichermitteln eine im Vergleich zum Stand der Technik große und beinahe unbegrenzte Langzeitstabilität auf.

Unter Anderem wird hierdurch auch einer mit einer gegenseitigen Zerstörung der Schüttungselemente einhergehenden Verdichtung einer hiernach mit Schutt zugesetzten Schüttung bis hin zu einer porenfreien Masse, die nicht mehr vom Arbeitsfluid durchströmt werden kann, vorgebeugt. Darüber hinaus wird so eine Beschädigung oder Zerstörung der Wandungen des die Schüttung beherbergenden Wärmespeicherraums bzw. einer zwischen den Wandungen und den Wärmespeichermitteln angeordneten Wärmeisolation verhindert. Dies ist insbesondere bei einem Temperaturwechseln unterzogenen Wärmespeicher von Belang, da die Wandungen des die Schüttung umfassende Wärmespeichermittel beherbergenden Wärmespeicherraums zur Verhinderung von Wärmeverlusten eine Wärmeisolierung und/oder eine Wärmedämmung umfassen, welche einem ansonsten bei Wärmeausdehnung entstehenden, den zuvor beschriebenen hydrostatischen Druck übersteigenden kritischen Horizontaldruck nicht standhalten können, wodurch sie beschädigt oder zerstört würden.

Die mechanische Auflockerung kann durch vorzugsweise zeitweilige, beispielsweise zyklische Verdrängung mindestens eines Teils der Schüttung aus einem Teil des Wärmespeicherraums, beispielsweise durch abwechselndes Ein- und Ausfahren mindestens eines Verdrängungskörpers in die Schüttung, und/oder durch Förderung mindestens eines Teils der Schüttung von einem Teil des Wärmespeicherraums in einen anderen Teil des Wärmespeicherraums, beispielsweise durch Betrieb mindestens eines sich über zumindest einen Teil der Höhe der Schüttung erstreckenden Fördermittels, und/oder durch mindestens eine Impulsausübung auf wenigstens einen Teil der Schüttung, beispielsweise durch vorzugsweise zeitweilig stoßweise Einströmen von Arbeitsfluid in den Wärmespeicherraum, erfolgen.

Vorzugsweise erfolgt die mechanische Auflockerung von unten.

Alternativ oder zusätzlich erfolgt die mechanische Auflockerung von oben.

Beispielsweise kann die mechanische Auflockerung durchgängig von unten nach oben erfolgen.

Die mechanische Auflockerung kann kontinuierlich oder diskontinuierlich, beispielsweise in Zyklen erfolgen.

Die mechanische Auflockerung kann an einer und/oder mehreren Stellen gleichzeitig und/oder zeitversetzt erfolgen.

Ein zweiter Gegenstand der Erfindung betrifft einen in einem Wärmespeicherraum Temperaturwechseln unterworfene Wärmespeichermittel beherbergenden Wärmespeicher.

Zur Zufuhr und zur Entnahme von Wärme kann der Wärmespeicherraum zumindest zeitweilig von einem Arbeitsfluid durchströmt werden.

Die Wärmespeichermittel sind bevorzugt derart ausgebildet, dass sie zumindest zeitweilig von dem die Wärmezufuhr zum Wärmespeicher und die Wärmeentnahme aus dem Wärmespeicher besorgenden Arbeitsfluid vorzugsweise unmittelbar durchströmt sind.

Die Wärmespeichermittel umfassen eine Schüttung bzw. ein Haufwerk mit einander berührenden Schüttungs- bzw. Haufwerkelementen. Zwischen den einander berührenden Schüttungselementen weist die Schüttung miteinander kommunizierende, durchgehende Poren auf, welche zumindest zeitweilig von dem Arbeitsfluid durchströmt sind.

Der Wärmespeicher umfasst zumindest auf einen Teil der Schüttung einwirkende Auflockerungsmittel. Die Auflockerungsmittel setzen durch eine mechanische Krafteinwirkung zumindest einen Teil der Schüttungselemente gezielt in Bewegung relativ zueinander und verschieben dadurch zumindest einen Teil der Schüttungselemente innerhalb der Schüttung.

Die Auflockerungsmittel können mindestens ein zumindest zeitweilig abwechselnd in den Wärmespeicherraum ein- und ausfahrendes Verdrängungsmittel umfassen, beispielsweise einen oder mehrere vorzugsweise von unten vom Boden des Wärmespeicherraums nach oben in die Schüttung ein- und wieder ausfahrende Stempel.

Die Auflockerungsmittel können alternativ oder zusätzlich mindestens ein in dem Wärmespeicherraum angeordnetes, zumindest zeitweilig arbeitendes Fördermittel umfassen, beispielsweise eine oder mehrere, beispielsweise am Boden des Wärmespeicherraums aufstehende und/oder vom Deckel des Wärmespeicherraums herabreichende, in die Schüttung reichende Förderschnecken. Allgemein können die Mittel zum Anheben eine oder mehrere auf gleicher Höhe und/oder auf verschiedenen Höhen in die Schüttung einwirkende Fördermittel umfassen, welche bei deren Betrieb vorzugsweise einen Teil der Schüttung über ihre Förderlänge von unten nach oben fördern.

Die Auflockerungsmittel können alternativ oder zusätzlich mindestens einen ein unter Überdruck gegenüber dem Wärmespeicherraum stehendes Arbeitsfluid beherbergenden Druckspeicher sowie Mittel zum zumindest zeitweilig stoßweise Einströmen des Arbeitsfluids aus dem Druckspeicher in den Wärmespeicherraum umfassen. Vorzugsweise erfolgt das stoßweise Einströmen dabei von unten in die Schüttung.

Wichtig ist hervorzuheben, dass auch eine beliebige Kombination einer beliebigen Anzahl der verschiedenen aufgezählten Auflockerungsmittel denkbar ist.

Die Auflockerungsmittel wirken bevorzugt auf zumindest einen am Boden des Wärmespeicherraums befindlichen Teil der Schüttung ein. Beispielsweise wirken die Auflockerungsmittel bevorzugt nur auf einen Teil des zumindest am Boden des Wärmespeicherraums befindlichen Teils der Schüttung ein. Ein verbleibender Teil der Schüttung, beispielsweise ein verbleibender am Boden des Wärmespeicherraums verbleibender Teil der Schüttung, wird vorzugsweise nicht mit angehoben.

Die Auflockerungsmittel können kontinuierlich und/oder diskontinuierlich betrieben sein.

Bevorzugt ist wenigstens ein Teil der im Wärmespeicherraum beherbergten Schüttungselemente kugelförmig. Vorzugsweise sind alle Schüttungselemente kugelförmig. Eine Kogelform stellt eine besonders gute Ausnutzung des Wärmespeicherraums durch die Wärmespeichermittel sicher. Darüber hinaus weisen Kugeln eine kleinstmögliche Angriffsfläche für ein gegenseitiges Verkeilen auf, was mitursächlich für einen den kritischen Horizontaldruck übersteigenden Horizontaldruck ist.

Besonders bevorzugt besteht zumindest ein Teil der Schüttungselemente zumindest zum Teil aus mindestens einem Keramikwerkstoff. Vorzugsweise bestehen alle Schüttungselemente vollständig aus mindestens einem Keramikwerkstoff.

Besonders bevorzugt handelt es sich bei den Schüttungselementen um Keramikkugeln.

Alternativ oder zusätzlich kann zumindest ein Teil der Schüttungselemente zumindest teilweise aus einem gebrochenen Naturmaterial bestehen oder ein solches umfassen. Gebrochenes Naturmaterial kann besonders günstig zur Verfügung gestellt werden. Darüber hinaus ist so ein ständiges und ohne die Gefahr von Engpässen bei der Beschaffung Zurverfügungstehen zumindest eines Bestandteils der Schüttungselemente der Schüttung sichergestellt. Darüber hinaus können Zwischenlagerung und Transport einfach und kostengünstig gewährleistet werden.

Der dem Verhältnis des Volumens aller Schüttungselemente der Schüttung zum von der Schüttung eingenommenen Volumen entsprechende Raumfüllungsgrad der Schüttung ist bevorzugt kleiner gleich

$$\pi/3\sqrt{2} \approx 0{,}74048 \approx 74\%.$$

Vorzugsweise weist die Schüttung eine dem Verhältnis des Volumens der die Zwickel der Schüttung bildenden, miteinander kommunizierenden, durchgehenden Poren zum von der Schüttung eingenommenen Volumen entsprechende Porosität von bis zu 45% auf, besonders bevorzugt von 38% bis 42%.

Dabei gilt vorzugsweise, dass die Summe des Raumfüllungsgrads und der Porosität gleich 1 ist.

Der Wärmespeicher kann als Energiespeicher für ein solarthermisches Kraftwerk und/oder für ein adiabatisches Druckluftspeicherkraftwerk vorgesehen sein.

Bei dem Arbeitsfluid kann es sich beispielsweise um unter Druck stehende Luft eines Druckluftspeicherkraftwerks handeln, etwa um die von einem Verdichter einer Kaverne oder von der Kaverne einer Turbine zuzuführende Druckluft.

Der Wärmespeicherraum kann durch einen beispielsweise von einem Betonmantel umgebenen Behälterinnenraum gebildet sein.

Der Wärmespeicher kann einen Druckbehälter beispielsweise mit einem einen als Wärmespeicherraum vorgesehenen Behälterinnenraum umgebenden Betonmantel umfassen. Hierdurch ist der Wärmespeicher zur Verwendung in Verbindung mit einem unter Druck stehenden Arbeitsfluid geeignet. Beispielsweise kann der Wärmespeicher so zur Verwendung in einem Druckluftspeicherkraftwerk vorgesehen sein, wobei die unter Druck stehende Luft das Arbeitsfluid bilden kann.

Der Wärmespeicher ist zur Durchführung des als erster Gegenstand der Erfindung beschriebenen Verfahrens geeignet, so dass sich die mit dem Verfahren erzielbaren Vorteile auch mit dem Wärmespeicher erzielen lassen.

Durch die Auflockerungsmittel wird einerseits eine gegenseitige Zerstörung der Schüttungselemente und andererseits eine Beschädigung oder Zerstörung zumindest eines Teils der Wandungen des Wärmespeicherraums aufgrund von Volumenänderungen der Schüttungselemente verursacht durch Temperaturänderungen der Schüttung verhindert. Die Auflockerungsmittel verhindern dabei, dass der Druck in der Schüttung und zwischen der Schüttung und den Wandungen des die Schüttung beherbergenden Wärmespeicherraums so groß wird, dass es zu einer Zerstörung der Schüttungselemente und/oder Beschädigung oder Zerstörung der eine Wärmeisolierung und/oder Wärmedämmung umfassenden Wandungen des Wärmespeicherraums kommen kann.

Kurzbeschreibung der Zeichnungen

Die Erfindung wird nachfolgend anhand von in den Zeichnungen dargestellten Ausführungsbeispielen näher erläutert. Darin bezeichnen gleiche Bezugszeichen gleiche oder gleich wirkende Elemente. Der Übersicht halber können nur Bezugszeichen in den einzelnen Zeichnungen dargestellt sein, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

Fig. 1    ein Ausführungsbeispiel eines Wärmespeichermittel beherbergenden Wärmespeichers in einer Draufsicht.

Fig. 2    einen Schnitt entlang der Linie A-A durch den Wärmespeichermittel beherbergenden Wärmespeicher aus Fig. 1.

Fig.3    einen Schnitt entlang der Linie B-B durch den Wärmespeichermittel beherbergenden Wärmespeicher aus Fig. 2.

Fig. 4    den durch Weglassung einiger Details übersichtlicheren Schnitt aus Fig. 3.

Fig. 5    einen Ausschnitt eines Schnitts durch eine Schüttung umfassende Wärmespeichermittel.

Fig.6    einen Schnitt durch einen Wärmespeichermittel beherbergenden Wärmespeicher gemäß eines weiteren Ausführungsbeispiels.

Ausführliche Beschreibung der bevorzugten Ausführungsbeispiele

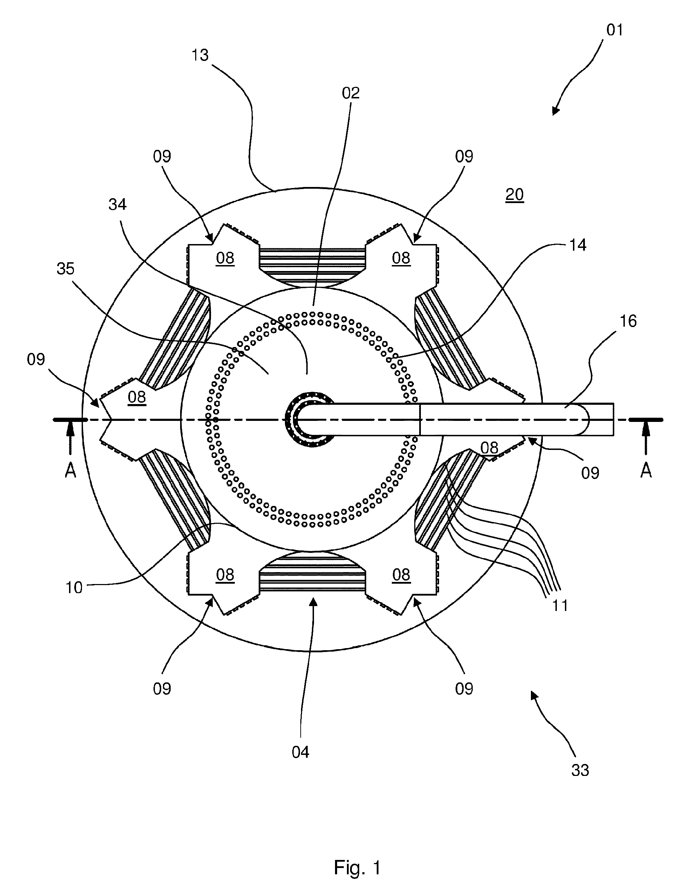

Ein in den Fig. 1 bis Fig. 6 ganz oder in Teilen bzw. verschiedenen Ansichten dargestellter Wärmespeicher 33 besteht im Wesentlichen aus mindestens einem Wärmespeichermittel 22 beherbergenden und zum Austausch von Wärme mit den Wärmespeichermitteln 22 zumindest zeitweilig von einem Arbeitsfluid 27 durchströmten Wärmespeicherraum 23.

Der Wärmespeicherraum 23 ist bevorzugt durch einen von einem Betonmantel 07 umschlossenen Behälterinnenraum 05 gebildet.

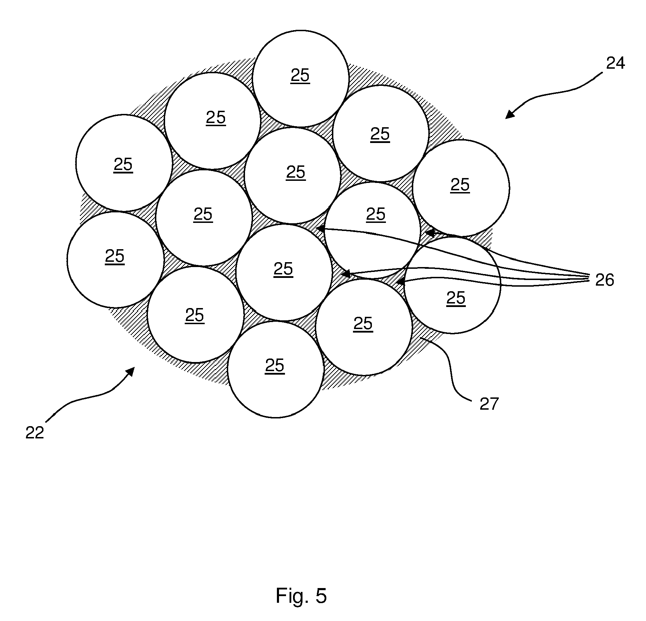

Die zum Austausch von Wärme mit dem Arbeitsfluid 27 sowie zur wenigstens zeitweiligen Speicherung der Wärme von deren Zufuhr bis zu deren Entnahme durch das Arbeitsfluid 27 vorgesehenen Wärmespeichermittel 22 umfassen eine in Fig. 5 dargestellte Schüttung 24 aus aneinander berührenden Schüttungselementen 25. Zwischen den Schüttungselementen 25 weist die Schüttung 24 miteinander kommunizierende, durchgehende Poren 26 auf. Die Poren 26 werden von dem Arbeitsfluid 27 zumindest zeitweilig durchströmt.

Die Schüttungselemente 25 können wie in Fig. 5 dargestellt gleiche Abmessungen und/oder gleiche Geometrien aufweisen. Alternativ können die Schüttungselemente 25 unterschiedliche Abmessungen und/oder unterschiedliche Geometrien aufweisen.

Damit der Druck in der Schüttung 24 und zwischen der Schüttung 24 und den Wandungen des die Schüttung beherbergenden Wärmespeicherraums 23 unterhalb eines auch als kritischer Horizontaldruck bezeichneten Werts bleibt, bei dessen Übersteigen es zu einem allmählichen Zusetzen der zur Durchströmung durch das Arbeitsfluid 27 vorgesehenen durchgehenden Poren 26 durch aus sich nach und nach wegen unterschiedlicher Wärmeausdehnungen bei aufeinander folgenden Temperaturwechseln gegenseitig vollständig oder teilweise zerstörenden Schüttungselementen 25 entstehendem Schutt käme und/oder bei dem es zu einer Beschädigung oder Zerstörung der eine Wärmeisolierung und/oder Wärmedämmung umfassenden Wandungen des Wärmespeicherraums 23 kommen würde, ist vorgesehen, beispielsweise kontinuierlich und/oder in regelmäßigen und/oder unregelmäßigen Zyklen durch eine mechanische Krafteinwirkung zumindest einen Teil der Schüttungselemente 25 gezielt in Bewegung relativ zueinander zu versetzen und in der Schüttung 24 zu verschieben, um eine zumindest zeitweilige mechanische Auflockerung der Wärmespeichermittel 22 im Wärmespeicherraum 23 durchzuführen.

Die zeitweilige Auflockerung erfolgt beispielsweise kontinuierlich und/oder in regelmäßigen und/oder unregelmäßigen Zyklen. Durch die Auflockerung wird eine erneute Bewegungsmöglichkeit der Schüttungselemente 25 in der Schüttung 24 bei darauf folgenden Temperaturzyklen erreicht. Nach der Auflockerung hält die so geschaffene Bewegungsmöglichkeit zumindest über einen bestimmten Zeitraum an, vor, zu oder nach dessen Ablauf dann erneut eine Auflockerung vorgenommen wird. Alternativ oder zusätzlich kann die Auflockerung zumindest zeitweilig ständig betrieben werden.

Die mechanische Auflockerung kann durch zeitweilige Verdrängung mindestens eines Teils der Schüttung 24 aus einem Teil des Wärmespeicherraums 23 und/oder durch Förderung mindestens eines Teils der Schüttung 24 von einem Teil des Wärmespeicherraums 23 in einen anderen Teil des Wärmespeicherraums 23 und/oder durch mindestens eine Impulsausübung auf mindestens einen Teil der Schüttung 24 erfolgen. Die genannten Maßnahmen können beispielsweise unter Anhebung mindestens eines Teils der Schüttung 24 vorgenommen werden. Der angehobene Teil der Schüttung 24 kann einen am Boden 42 des Wärmespeicherraums 23 befindlichen Teil der Schüttung 24 umfassen. Dabei kann vorgesehen sein, zumindest einen verbleibenden Teil der Schüttung 24 nicht mit anzuheben.

Die mechanische Auflockerung kann an einer und/oder mehreren Stellen gleichzeitig und/oder zeitversetzt und/oder in regelmäßigen und/oder unregelmäßigen Zyklen von unten und/oder von oben und/oder durchgängig von unten nach oben im Wärmespeicherraum 23 erfolgen.

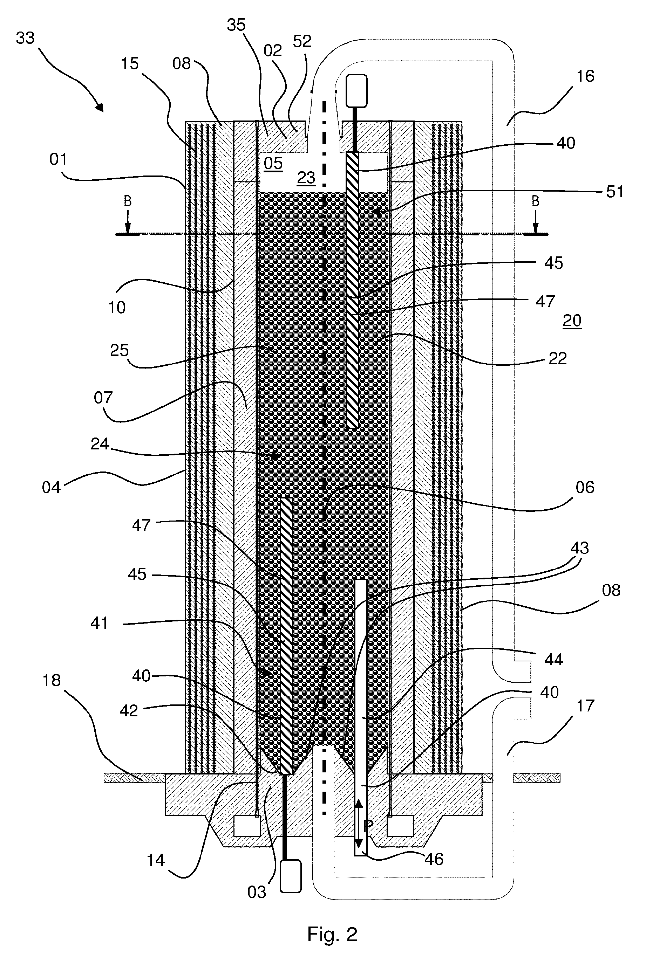

Um die beschriebenen Maßnahmen durchzuführen, umfasst der Wärmespeicher 33 zumindest auf einen Teil der Schüttung 24 einwirkende, durch eine mechanische Krafteinwirkung zumindest einen Teil der Schüttungselemente 25 gezielt in Bewegung relativ zueinander versetzende und in der Schüttung 24 verschiebende Auflockerungsmittel 40 (Fig. 2).

Die Auflockerung erfolgt vorzugsweise wenigstens zum Teil von unten. Hierzu sind die Auflockerungsmittel 40 bevorzugt zumindest zum Teil in einem unteren Bereich 41 des Wärmespeicherraums 23, vorzugsweise am Boden 42 des Wärmespeicherraums 23 aufstehend und/oder aus diesem in den Wärmespeicherraum 23 und die darin enthaltene Schüttung 24 hineinreichend angeordnet. Alternativ oder zusätzlich können die Auflockerungsmittel 40 zumindest zum Teil in einem oberen Bereich 51 des Wärmespeicherraums 23 auf die Schüttung 24 einwirkend vorgesehen sein.

Beispielsweise umfassen die Auflockerungsmittel 40 wie in Fig. 2 dargestellt mindestens ein zumindest zeitweilig abwechselnd in den Wärmespeicherraum 23 ein- und wieder ausfahrendes Verdrängungsmittel 44 und/oder mindestens ein in dem Wärmespeicherraum 23 angeordnetes, zumindest zeitweilig arbeitendes Fördermittel 45.

Alternativ oder zusätzlich können die Auflockerungsmittel 40 mindestens einen ein unter Überdruck gegenüber dem Wärmespeicherraum 23 stehendes Arbeitsfluid 27 beherbergenden Druckspeicher sowie Mittel zum zumindest zeitweilig stoßweise Einströmen des Arbeitsfluids 27 aus dem Druckspeicher in den Wärmespeicherraum 23 umfassen.

Die Verdrängungsmittel 44 können beispielsweise wie in Fig. 2 dargestellt einen oder mehrere gleichzeitig synchron oder abwechselnd zeitversetzt von unten in die Schüttung 24 in einer durch den Doppelpfeil P angedeuteten Bewegungsrichtung ein- und wieder ausfahrende Stempel 46 umfassen. Der oder die Stempel 46 können dabei stumpf ausgebildet sein, wodurch im Vergleich zu einer spitzen Ausführung eine verbesserte Auflockerung erreicht wird, weil mit dem Einfahren des stumpfen Stempels 46 gleichzeitig ein Teil der Schüttungselemente angehoben und nicht wie bei einer spitzen Ausführung zur Seite verdrängt wird.

Alternativ oder zusätzlich zu den Verdrängungsmitteln 44 können die Auflockerungsmittel 40 wie in Fig. 2 dargestellt ein oder mehrere Fördermittel 45 umfassen. Die Fördermittel 45 können beispielsweise eine oder mehrer gleichzeitig synchron oder abwechselnd zeitversetzt in der Schüttung 24 arbeitende Förderschnecken 47 umfassen. Mehrere Förderschnecken 47 können dabei in gleicher oder unterschiedlicher Höhe im Wärmespeicherraum 23 untergebracht sein.

Es ist ersichtlich, dass bei den beschriebenen Auflockerungsmitteln 40 die Kraftrichtung der mechanischen Krafteinwirkung bevorzugt zumindest eine von unten nach oben gerichtete Komponente umfasst und dass die Auflockerungsmittel 40 bevorzugt auf zumindest einen am Boden 42 des Wärmespeicherraums 23 befindlichen Teil der Schüttung 24 einwirken.

Zumindest um einen Teil der Auflockerungsmittel 40 herum kann eine trichter- oder siloartige Ausgestaltung 43 des Bodens 42 des Wärmespeicherraums 23 vorgesehen sein. Hierdurch wird ein Verkeilen der Schüttungselemente 25 zwischen den sich in diesem Bereich trichterförmig in Richtung der mechanischen Krafteinwirkung erweiternden Wandungen des Wärmespeicherraums 23 beim Betrieb der Auflockerungsmittel 40 verhindert.

Ein oberer Bereich 51 des Wärmespeicherraums 23 kann dabei frei von Auflockerungsmitteln 40 sein. Alternativ kann beispielsweise mindestens ein Stempel 44 bis in den oberen Bereich 51 des Wärmespeicherraums 23 hinein von unten her durch die Schüttung 24 hindurch ein- und wieder herausfahren, oder beispielsweise an einem den Wärmespeicherraum 23 nach oben hin begrenzenden Deckel 52 angeordnet von oben her in die Schüttung 24 ein- und wieder austauchen.

Wichtig ist hervorzuheben, dass wenigstens ein Teil der Schüttungselemente 25 zumindest zum Teil gebrochenes Naturmaterial umfassen können. Alternativ oder zusätzlich ist denkbar, dass wenigstens ein Teil der Schüttungselemente 25 zumindest teilweise aus einem Keramikmaterial bestehen können und/oder zumindest teilweise aus Eisen und/oder Stahl. Die Schüttungselemente 25 können wie in Fig. 5 dargestellt sämtlich, oder zum Teil kugelförmig sein.

Der Wärmespeicher 33 kann einen Druckbehälter 01 mit einem von einem Betonmantel 07 umschlossenen Behälterinnenraum 05 als die Wärmespeichermittel 22 beherbergenden Wärmespeicherraum 23 umfassen.

Hierdurch ist der Wärmespeicher 33 insbesondere zur Verwendung in einem Druckluftspeicherkraftwerk geeignet. Bei einer solchen Verwendung kann der Wärmespeicher von der das Arbeitsfluid des Druckluftspeicherkraftwerks bildenden Druckluft direkt durchströmt sein. Zur Auflockerung und/oder zur Unterstützung der Auflockerung kann bei dieser Verwendung stoßweise Druckluft aus dem Druckspeicher des Druckluftspeicherkraftwerks z.B. von unten in den Wärmespeicherraum 23 des Wärmespeichers 33 eingeblasen werden.

Der Betonmantel 07 umfasst wenigstens eine zwischen einem Behälterkopf 02 und einem Behälterfuß 03 vorgesehene hohlzylinderförmige Behälterpartie 04. Der Behälterinnenraum 05 ist vom Behälterkopf 02, dem Behälterfuß 03 und der wenigstens einen hohlzylinderförmigen Behälterpartie 04 umschlossen. Der Betonmantel 07 kann darüber hinaus zusätzlich zu der hohlzylinderförmigen Behälterpartie 04 zumindest Teile des Behälterkopfs 02 und/oder Behälterfußes 03 umfassen.

Die hohlzylinderförmige Behälterpartie 04 kann eine gerade, gekrümmt oder entlang einer beliebigen Linie verlaufende Zylinderachse 06 aufweisen, welche sich entlang der Achse des Druckbehälters 01 vom Behälterkopf 02 bis zum Behälterfuß 03 erstreckt. Die hohlzylinderförmige Behälterpartie 04 kann aneinander angrenzend gleiche oder unterschiedliche Außen und/oder Innenquerschnitte aufweisen, wobei die Mittelpunkte aufeinander folgender Querschnitte vorzugsweise entlang der Zylinderachse 06 verlaufen. Der Behälterkopf 02 kann beispielsweise den Deckel 52 des Wärmespeicherraums 23 und der Behälterfuß 03 den Boden 42 des Wärmespeicherraums 23 bilden. Es ist sowohl eine stehende, als auch eine liegende Anordnung des Druckbehälters 01 denkbar. Bei einer stehenden Anordnung dient der Behälterfuß 03 wie in Fig. 2 dargestellt bevorzugt einer Aufstellung des Druckbehälters 01 beispielsweise auf dem Erdboden 18 bzw. einer zumindest zum Teil beispielsweise in den Erdboden 18 eingelassenen Aufstellung des Druckbehälters 01.

Um unter Anderem Belastungen durch die aus dem beispielsweise unter Druck stehenden Arbeitsfluid 27 resultierenden Kräfte zu widerstehen, kann der Betonmantel 07 wenigstens teilweise in mindestens einer Richtung schlaff bewehrt sein. Hierzu können Bewehrungen 15 vorgesehen sein, welche in Umfangsrichtung und/oder in Richtung entlang der Zylinderachse 06 und/oder in einer anderen Richtung, beispielsweise spiralförmig um die Zylinderachse 06 herum im Betonmantel 07 verlaufen können.

Alternativ oder zusätzlich kann der Betonmantel 07 wenigstens teilweise in mindestens einer Richtung vorgespannt sein. Hierzu können getrennte Spannglieder 11 in Umfangsrichtung und/oder Spannglieder 14 in Richtung entlang der Zylinderachse 06 vorgesehen sein.

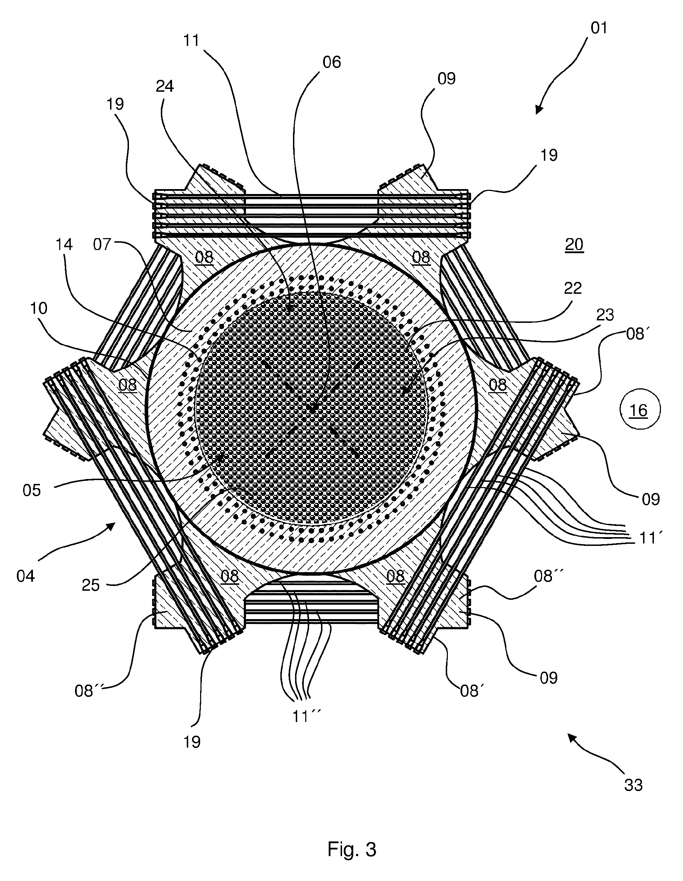

Dabei können wie bei der in den Fig. 3 dargestellten Ausgestaltung in Umfangsrichtung wirkende linear verlaufende bzw. lineare Spannglieder 11 vorgesehen sein. Da diese nicht gekrümmt verlaufen, sondern linear verlaufend ausgebildet sind, weisen diese keine Reibungsverluste durch eine auch nur teilweise Umschlingung auf, wodurch es auch zu keinen Verschleißerscheinungen beispielsweise durch eine thermische und/oder mechanische Wechselbeanspruchung des als Wärmespeicher 33 mit veränderlicher Temperatur und dadurch veränderlicher Wärmeausdehnung ausgeführten Druckbehälters 01 kommt. Darüber hinaus ist durch außen liegende lineare Spannglieder 11 ein gleichmäßiger Verlauf der Vorspannung sichergestellt.

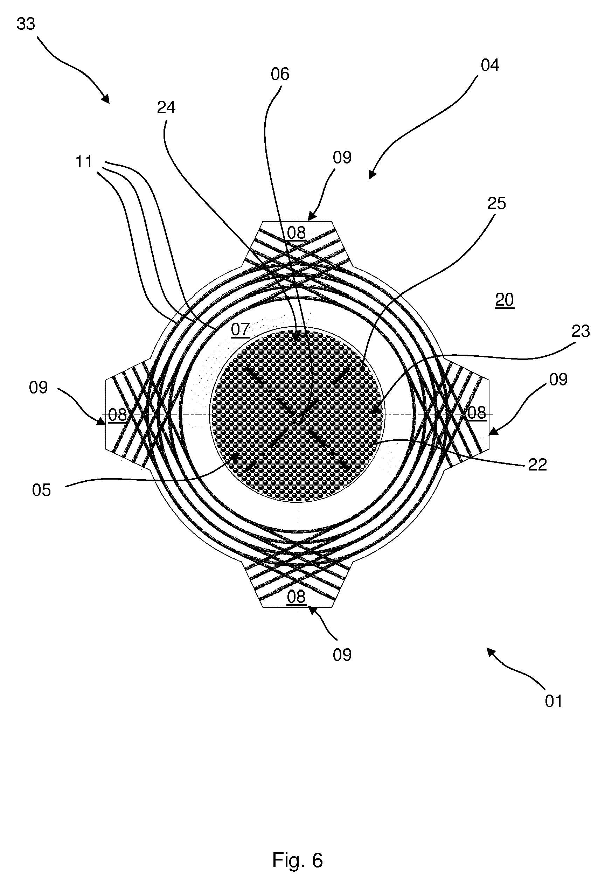

Alternativ können die in Umfangsrichtung wirkenden Spannglieder wie in Fig. 6 dargestellt die Zylinderachse 06 zumindest teilweise umschlingen, wobei die Spannglieder 11 zumindest abschnittsweise gekrümmt verlaufen. Eine derart nur teilweise Umschlingung stellt einen vertretbaren Kompromiss zwischen Wirtschaftlichkeit im Hinblick auf die Anzahl der Spannglieder 11 und Verschleiß durch Reibungsverluste dar.

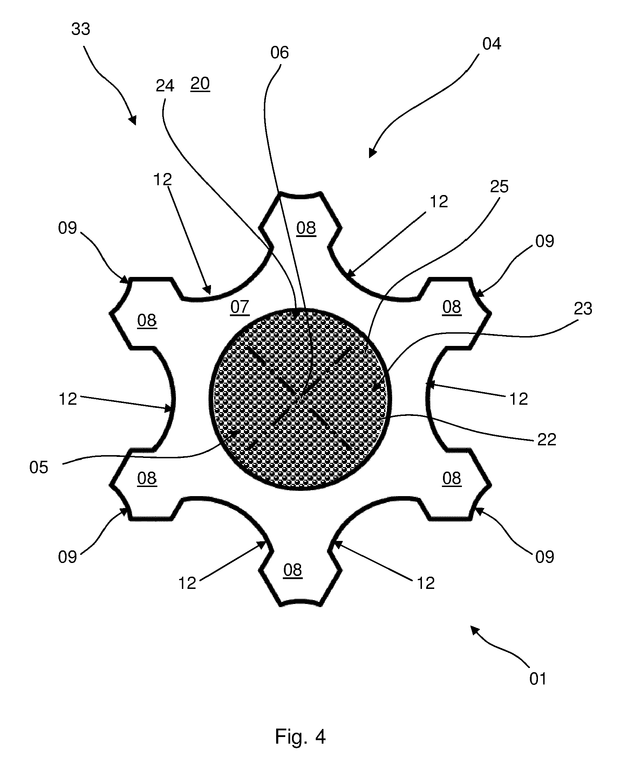

Wichtig ist an dieser Stelle hervorzuheben, dass der Übersichtlichkeit halber und um andere, nachfolgend noch beschriebene Elemente besser erkennbar darzustellen, in Fig. 4 auf die Darstellung von Spanngliedern verzichtet wurde, was keinesfalls bedeuten soll, dass bei der in Fig. 4 dargestellten Ausführungsform keine derartigen Spannglieder vorgesehen sein können.

Zur Verwirklichung einer Vorspannung in Umfangrichtung mittels linearer Spannglieder 11 können diese wie in den Fig. 1 bis Fig. 3 dargestellt außerhalb des Betonmantels 07 angeordnet sein. Hierzu können zumindest auf dem als hohlzylinderförmige Behälterpartie 04 ausgebildeten Teil des Betonmantels 07 von der Zylinderachse 06 aus gesehen auf der dem Behälterinnenraum 05 abgewandten Außenseite des Betonmantels radial nach außen aufstehende Fortsätze 08 vorgesehen sein, zwischen denen die linearen Spannglieder 11 gespannt sind.

Die auf der hohlzylinderförmigen Behälterpartie 04 des Betonmantels 07 radial von der Zylinderachse 06 weg nach außen aufstehende Fortsätze 08 sind hierbei in einem in den Fig. 3 und Fig. 4 dargestellten, normal zur Zylinderachse 06 verlaufenden Querschnitt und in der in Fig. 1 dargestellten Draufsicht vorzugsweise gleichmäßig über den Umfang des Betonmantels 07 verteilt angeordnet. In den in den Fig. 3 und Fig. 4 dargestellten Querschnitten erstrecken sich die Fortsätze 08 vorzugsweise ununterbrochen vom Behälterfuß 03 zum Behälterkopf 02.

Die Fortsätze 08 sind zumindest derart weit aufstehend ausgebildet, dass zumindest vom freien Ende 09 jeden Fortsatzes 08 aus zumindest die freien Enden 09 der beiden in Umfangsrichtung unmittelbar benachbarten Fortsätze 08 in gerader Linie über die konvexe Wölbung der Mantelfläche 10 des Betonmantels 07 hinweg sichtbar sind. Hieraus ergibt sich die Notwendigkeit, dass wenigstens drei auf dem Betonmantel 07 radial nach Außen von der Zylinderachse 06 weg aufstehende Fortsätze 08 vorgesehen sind.

Zwischen in Umfangsrichtung benachbarten Fortsätzen 08 sind die linearen Spannglieder 11 angeordnet. Die linearen Spannglieder 11 halten wenigstens die hohlzylinderförmige Behälterpartie 04 des Betonmantels 07 unter einer in Umfangsrichtung und gegen einen Überdruck im Behälterinnenraum 05 wirkende radial von außen zur Zylinderachse 06 hin gerichteten Vorspannung.

Vorzugsweise ist eine gerade Anzahl n von gleichmäßig verteilt um den Umfang des Betonmantels 07 angeordneten Fortsätzen 08 vorgesehen. Besonders bevorzugt sind wie in den Fig. 1 bis 4 dargestellt insgesamt sechs gleichmäßig über den Umfang verteilt auf dem Betonmantel 07 von der Zylinderachse 06 weg radial nach außen aufstehende Fortsätze 08 vorgesehen.

Hierdurch können wie in Fig. 3 ersichtlich in einer ersten normal zur Zylinderachse 06 verlaufenden Querschnittsebene lineare Spannglieder 11' zwischen ersten Paaren aus benachbarten Fortsätzen 08' gespannt sein, wohingegen in einer unmittelbar benachbarten, zweiten normal zur Zylinderachse 06 verlaufenden Querschnittsebene lineare Spannglieder 11" zwischen zweiten Paaren aus benachbarten Fortsätzen 08" gespannt sind. Die ersten Paare benachbarter Fortsätze 08', zwischen denen in der ersten Querschnittsebene die Spannglieder 11' gespannt sind, sind hierbei gegenüber den zweiten Paaren benachbarter Fortsätze 08", zwischen denen in der zweiten Querschnittsebene die Spannglieder 11" gespannt sind, um einen Winkel 360°/n um die Zylinderachse 06 verdreht, wobei n die Zahl der Fortsätze in einer Querschnittsebene ist.

Wichtig ist an dieser Stelle hervorzuheben, dass die Fortsätze 08 integrale Bestandteile wenigstens der hohlzylinderförmigen Behälterpartie 04 des Betonmantels 07 sein können, wobei die Fortsätze 08 hierbei in einem Herstellungsvorgang gemeinsam mit dem Betonmantel 07 und vorzugsweise mit diesem fest verbunden hergestellt werden können. Alternativ können die Fortsätze 08 stempelförmig auf dem Betonmantel 07 aufstehend ausgebildet sein. Darüber hinaus können sich die Fortsätze 08 in beiden Ausgestaltungsvarianten in einem Querschnitt normal zur Zylinderachse 06 betrachtet vom Betonmantel 07 aus gesehen zu ihren freien Enden 09 hin verjüngen. Alternativ oder zusätzlich können die Fortsätze 08 in beiden Ausgestaltungsvarianten auswuchsartig mit gleichmäßigen und knickfreien Übergängen in die äußere Gestalt zumindest der hohlzylinderförmigen Behälterpartie 04 integriert sein.

Zwischen den benachbarten Fortsätzen 08 können Druckbogen 12 vorgesehen sein (Fig. 4).

Die freien Enden 09 der Fortsätze 08 können Aufnahmesysteme 19 für die linearen Spannglieder 11 tragen. Die Aufnahmesysteme 19 können als Metallkonstruktionen beispielsweise aus Stahl ausgeführt sein. Die linearen Spannglieder 11 erstrecken sich vom einen am freien Ende 09 eines ersten Fortsatzes 08 angeordneten Aufnahmesystem 19 zum nächsten, am freien Ende 09 eines zweiten Fortsatzes 08 angeordneten Aufnahmesystem 19. Die linearen Spannglieder 11 können hierbei in so genannten Speichen verankert sein.

Der von dem Wärmespeicher 33 umfasste Druckbehälter 01 kann wie in Fig. 1 angedeutet durch eine Ummantelung 13 umhüllt sein. Die Ummantelung 13 kann dem Schutz des Druckbehälters 01 gegen Umwelteinflüsse, insbesondere gegen Witterungseinflüsse und Wärmestrahlung dienen. Durch Unterbrechung der Wärmestrahlung vermittels der Ummantelung 13 können Wärmeverluste des Wärmespeichers verringert werden. Gleichzeitig kann die Ummantelung 13 den Druckbehälter 01, insbesondere bei einer in den Fig. 1 bis Fig. 4 dargestellten Ausführung mit außen liegenden linearen Spanngliedern 11 gegen unbefugte und/oder unberechtigte Manipulation schützen. Die Ummantelung 13 kann als luftdurchlässige Hülle ausgestaltet sein, damit es zu keinem Wärmestau unter ihr kommt.

Zumindest der Betonmantel 07 des Druckbehälters 01 kann wie in Fig. 2 dargestellt mittels Spanngliedern 14 in Richtung parallel zur Zylinderachse 06 vorgespannt sein. Die Spannglieder 14 können hierbei vom Behälterkopf 02 zum Behälterfuß 03 in eigens hierfür vorgesehenen Kanälen, Aussparungen, Rohren oder dergleichen zumindest in der hohlzylinderförmigen Behälterpartie 04 des Betonmantels 07 des Druckbehälters 01 verdeckt verlaufen.

Der Betonmantel 07 kann wie in Fig. 2 dargestellt mittels einer zumindest in Richtung parallel zur Zylinderachse 06 verlaufenden Bewehrung 15 schlaff bewehrt sein. Alternativ oder zusätzlich kann auch eine schlaffe Bewehrung in Umfangsrichtung vorgesehen sein. Mittels einer gegebenenfalls vorgesehenen, auch als Schlaffbewehrung bezeichneten schlaff ausgeführten Bewehrungen kann die Sicherheit des als Druckbehälter 01 ausgeführten Wärmespeichers 23 gesteuert werden.

Wichtig ist hierbei die Trennung der Vorspannung von der für eine zusätzliche Sicherheit eventuell eingebauten schlaffen Bewehrung 15 hervorzuheben. Die schlaffe Bewehrung 15 kann ohne Störung und Berücksichtigung der Vorspannung im inneren Betonmantel 07 verlegt werden, und die Vorspannung kann außen angebracht werden. Das vereinfacht die Planung und den Bau eines als Druckbehälter 01 ausgeführten Wärmespeichers 23 erheblich und verbessert das Tragverhalten durch weniger Fehlstellen und Hohlräume im Betonmantel 07.

Der Betonmantel 07 kann wie in den Fig. 3 und Fig. 4 dargestellt einen normal zur Zylinderachse 06 kreisrunden Innenquerschnitt aufweisen.

Der als Druckbehälter 01 ausgeführte Wärmespeicher 33 kann wie in Fig. 2 dargestellt beispielsweise am Behälterkopf 02 mit einer ersten Zu- und/oder Abführungsleitung 16 für das Arbeitsfluid 27 versehen sein. Beispielsweise am Behälterfuß 03 kann der Druckbehälter 01 beispielsweise mit wenigstens einer zweiten Zu- und/oder Abführungsleitung 17 für das Arbeitsfluid 27 versehen sein.

Der einen Druckbehälter 01 mit im durch den Behälterinnenraum 05 gebildeten Wärmespeicherraum 23 beherbergten Wärmespeichermitteln 22 umfassende Wärmespeicher 33 kann Teil einer Einrichtung zur Energieerzeugung, beispielsweise Teil eines Solarkraftwerks, insbesondere eines solarthermischen Kraftwerks sein.

Besonders bevorzugt kann der Wärmespeicher 33 für ein Druckluftspeicherkraftwerk, besonders bevorzugt für ein adiabatisches Druckluftspeicherkraftwerk vorgesehen sein.

Die erste Zu- und/oder Abführungsleitung 16 steht in diesem Fall bevorzugt wahlweise mit einem Verdichter oder einer Turbine in Verbindung bzw. ist wahlweise mit einem Verdichter oder einer Turbine in Verbindung bringbar. Die zweite Zu- und/oder Abführungsleitung 17 steht hierbei bevorzugt mit einem beispielsweise unterhalb des Erdbodens 18 angeordneten Druckluftspeicher in Verbindung bzw. ist wahlweise mit einem Druckluftspeicher in Verbindung bringbar.

Beispielsweise kann der Behälterkopf 02 eines vom Wärmespeicher 33 umfassten Druckbehälters 01 abnehmbar sein, wodurch der Behälterinnenraum 05 für Montage und Wartung, sowie zum Einbringen der die Wärmespeichermittel 22 bildenden Schüttung 24 leicht zugänglich ist. Vorzugsweise befindet sich bei einem aufrecht stehenden Druckbehälter 01 mindestens der Behälterkopf 02 oberhalb des Erdbodens 18, der Rest kann im Erdboden 18 versenkt sein. Alternativ ist denkbar, lediglich eine beispielsweise mittels einer Stahlkappe 34 verschlossene Zugangsöffnung im Behälterkopf 02 vorzusehen.

Vorzugsweise trennt eine nicht näher dargestellte, durch mindestens eine ebenfalls nicht näher dargestellte hitzebeständige Schicht geschützte erste thermisch isolierende Schicht die Wärmespeichermittel 22 vom hitzeempfindlicheren Betonmantel 07. Zwischen der ersten thermisch isolierenden Schicht und Betonmantel 07 sowie gegebenenfalls dem Behälterkopf 02 und dem Behälterfuß 03 kann sich darüber hinaus noch eine zweite thermisch isolierende Schicht befinden, falls die erste thermisch isolierende Schicht nicht selbst in ausreichendem Maße thermisch isolierend wirkt. Die zweite thermisch isolierende Schicht kann beispielsweise aus Luft bestehen. Die hitzebeständige Schicht nebst den einen oder mehreren thermisch isolierenden Schichten bilden dabei zumindest einen Teil einer Wärmeisolierung und/oder Wärmedämmung des Wärmespeicherraums 23 gegenüber der Umgebung 20. Hierbei kann es sich beispielsweise um eine von den Wandungen des Wärmespeicherraums 23 umfasste Wärmeisolierung und/oder Wärmedämmung handeln.

Der beispielsweise im oberen Bereich eines von einem Wärmespeicher 33 umfassten, stehend angeordneten Druckbehälters 01 vorgesehene Behälterkopf 02 kann als eine Betonkappe 35 ausgestaltet sein. Ebenso ist denkbar, dass eine Stahlkappe 34 in eine den Behälterkopf 02 bildenden Betonkappe 35 integriert ist.

Zumindest der Behälterkopf 02 und/oder der Behälterfuß 03 und/oder die hohlzylinderförmige Behälterpartie 04 des Betonmantels 07 des Druckspeichers 01 des Wärmespeichers 33 können gegen die Umgebung 20 durch wärmedämmendes Material thermisch isoliert sein. Die thermische Isolation kann zumindest zum Teil durch die gegebenenfalls vorgesehene Ummantelung 13 erfolgen.

Der Behälterfuß 03 kann in Form eines am Erdboden 18 oder zumindest zum Teil darin versenkt angeordneten Fundaments ausgestaltet sein, in den die darauf aufstehende und mittels des Behälterkopfs 02 an ihrer dem Erdboden 18 abgewandten Seite verschlossene hohlzylinderförmige Behälterpartie 04 des Betonmantels 07 eingegossen sein kann.

Die Erfindung ist insbesondere im Bereich der Herstellung von Wärmespeichern, beispielsweise für Anlagen zur Energieerzeugung und/oder zur Energiespeicherung gewerblich anwendbar.

**Bezugszeichenliste**

| | |
|---|---|
| 01 | Druckbehälter |
| 02 | Behälterkopf |
| 03 | Behälterfuß |
| 04 | hohlzylinderförmige Behälterpartie |
| 05 | Behälterinnenraum |
| 06 | Zylinderachse |
| 07 | Betonmantel |

| 08; 08'; 08" | Fortsatz |
|---|---|
| 09 | freies Ende |
| 10 | Mantelfläche |
| 11; 11'; 11" | Spannglied |
| 12 | Druckbogen |
| 13 | Ummantelung |
| 14 | Spannglied |
| 15 | Bewehrung |
| 16 | erste Zu- und/oder Abführungsleitung |
| 17 | zweite Zu- und/oder Abführungsleitung |
| 18 | Erdboden |
| 19 | Aufnahmesystem |
| 20 | Umgebung |
| 22 | Wärmespeichermittel |
| 23 | Wärmespeicherraum |
| 24 | Schüttung |
| 25 | Schüttungselement |
| 26 | Pore |
| 27 | Arbeitsfluid |
| 33 | Wärmespeicher |
| 34 | Stahlkappe |
| 35 | Betonkappe |
| 40 | Auflockerungsmittel |
| 41 | unterer Bereich des Wärmespeicherraums |
| 42 | Boden des Wärmespeicherraums |
| 43 | trichter- oder siloartige Ausgestaltung |
| 44 | Verdrängungsmittel |
| 45 | Fördermittel |
| 46 | Stempel |
| 47 | Förderschnecke |
| 51 | oberer Bereich des Wärmespeicherraums |
| 52 | Deckel |
| P | Bewegungsrichtung der Verdrängungsmittel |

## Patentansprüche

1. Verfahren zum Betrieb eines in einem Wärmespeicherraum (23) Temperaturwechseln unterworfene Wärmespeichermittel (22) beherbergenden Wärmespeichers (33), wobei die Wärmespeichermittel (22) zumindest zeitweilig von dem die Wärmezufuhr zum und die Wärmeentnahme aus dem Wärmespeicher (33) besorgenden Arbeitsfluid (27) durchströmt sind und eine Schüttung (24) mit aneinander berührenden Schüttungselementen (25) umfassen, zwischen denen die Schüttung (24) zur zumindest zeitweiligen Durchströmung mit dem Arbeitsfluid (27) vorgesehene, miteinander kommunizierende, durchgehende Poren (26) aufweist, **gekennzeichnet durch** eine zumindest zeitweilige mechanische Auflockerung der Wärmespeichermittel (22) im Wärmespeicherraum (23), indem **durch** eine mechanische Krafteinwirkung zumindest einen Teil der Schüttungselemente (25) gezielt in Bewegung relativ zueinander versetzt und in der Schüttung (24) verschoben werden.

2. Verfahren nach Anspruch 1,
**dadurch gekennzeichnet,**
**dass** die mechanische Auflockerung durch zeitweilige Verdrängung mindestens eines Teils der Schüttung (24) aus einem Teil des Wärmespeicherraums (23) und/oder durch Förderung mindestens eines Teils der Schüttung (24) von einem Teil des Wärmespeicherraums (23) in einen anderen Teil des Wärmespeicherraums (23) und/oder durch mindestens eine Impulsausübung auf mindestens einen Teil der Schüttung (24) erfolgt.

3. Verfahren nach Anspruch 1 oder 2,
**dadurch gekennzeichnet,**
**dass** die mechanische Auflockerung eine Anhebung mindestens eines Teils der Schüttung (24) vorsieht.

4. Verfahren nach Anspruch 3,
**dadurch gekennzeichnet,**
**dass** der angehobene Teil der Schüttung (24) einen am Boden (42) des Wärmespeicherraums (23) befindlichen Teil der Schüttung (24) umfasst.

5. Verfahren nach Anspruch 3 oder 4,
**dadurch gekennzeichnet,**
**dass** zumindest ein verbleibender Teil der Schüttung (24) nicht mit angehoben wird.

6. Verfahren nach einem der vorhergehenden Ansprüche,
**dadurch gekennzeichnet,**
**dass** die mechanische Auflockerung an einer und/oder mehreren Stellen gleichzeitig und/oder zeitversetzt von unten und/oder von oben und/oder durchgängig von unten nach oben im Wärmespeicherraum (23) erfolgt.

7. Verfahren nach einem der vorhergehenden Ansprüche,
**dadurch gekennzeichnet**
**dass** die mechanische Auflockerung kontinuierlich oder diskontinuierlich erfolgt.

8. Wärmespeicher (33) mit in einem Wärmespeicherraum (23) beherbergten, Temperaturwechseln unterzogenen Wärmespeichermitteln (22), welche zumindest zeitweilig von einem die Wärmezufuhr zum und die Wärmeentnahme aus dem Wärmespeicher (33) besorgenden Arbeitsfluid (27) durchströmt sind, wobei:

- die Wärmespeichermittel (22) eine Schüttung (24) mit aneinander berührenden Schüttungselementen (25) umfassen, und

- die Schüttung (24) zwischen den einander berührenden Schüttungselementen (25) miteinander kommunizierende, durchgehende Poren (26) aufweist, welche zumindest zeitweilig von dem Arbeitsfluid (27) durchströmt sind,

**gekennzeichnet durch**

zumindest auf einen Teil der Schüttung (24) einwirkende, **durch** eine mechanische Krafteinwirkung zumindest einen Teil der Schüttungselemente (25) gezielt in Bewegung relativ zueinander versetzende und in der Schüttung (24) verschiebende Auflockerungsmittel (40).

9. Wärmespeicher nach Anspruch 8,
**dadurch gekennzeichnet,**
**dass** die Auflockerungsmittel (40):

- mindestens ein zumindest zeitweilig abwechselnd in den Wärmespeicherraum (23) ein- und wieder ausfahrendes Verdrängungsmittel (44) und/oder
- mindestens ein in dem Wärmespeicherraum (23) angeordnetes, zumindest zeitweilig arbeitendes Fördermittel (45) und/oder
- mindestens einen ein unter Überdruck gegenüber dem Wärmespeicherraum (23) stehendes Arbeitsfluid (27) beherbergenden Druckspeicher sowie Mittel zum zumindest zeitweilig stoßweise Einströmen des Arbeitsfluids (27) aus dem Druckspeicher in den Wärmespeicherraum (23) umfassen.

10. Wärmespeicher nach Anspruch 8 oder 9,
**dadurch gekennzeichnet,**
**dass** die Kraftrichtung der mechanischen Krafteinwirkung zumindest eine von unten nach oben gerichtete Komponente umfasst.

11. Wärmespeicher nach einem der Ansprüche 8 bis 10,
**dadurch gekennzeichnet,**
**dass** die Auflockerungsmittel (40) auf zumindest einen am Boden (42) des Wärmespeicherraums (23) befindlichen Teil der Schüttung (24) einwirken.

12. Wärmespeicher nach einem der Ansprüche 8 bis 11,
**dadurch gekennzeichnet,**
**dass** wenigstens ein Teil der Schüttungselemente (25) kugelförmig ist.

13. Wärmespeicher nach einem der Ansprüche 8 bis 12,
**dadurch gekennzeichnet,**
**dass** wenigstens ein Teil der Schüttungselemente (25) zumindest zum Teil gebrochenes Naturmaterial umfassen.

14. Wärmespeicher nach einem der Ansprüche 8 bis 13,
**dadurch gekennzeichnet,**

**dass** zumindest ein Teil der Schüttungselemente (25) zumindest zum Teil aus mindestens einem Keramikwerkstoff bestehen.

15. Wärmespeicher nach einem der Ansprüche 8 bis 14,
**dadurch gekennzeichnet,**
**dass** der Raumfüllungsgrad der Schüttung (24) bevorzugt kleiner gleich $\pi/3\sqrt{2} \approx 0,74048 \approx 74\%$ ist.

Fig. 1

Fig. 2

Fig. 3

Fig. 4

Fig. 5

Fig. 6

Europäisches
Patentamt

European
Patent Office

Office européen
des brevets

## EUROPÄISCHER RECHERCHENBERICHT

Nummer der Anmeldung

EP 11 18 4256

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2008/154455 A2 (AUSRA INC [US]; MILLS DAVID R [US]; MIERISCH ROBERT C [US]) 18. Dezember 2008 (2008-12-18) * Absatz [0002] * * Absatz [0078] * * Absatz [0125] * * Absatz [0127] * ----- | 1-15 | INV. F28D17/00 F28D20/00 |
| A | WO 01/69155 A2 (AIR LIQUIDE [FR]) 20. September 2001 (2001-09-20) * Seite 25, Zeile 21 - Zeile 28; Abbildung 8 * ----- | 1-15 | |
| A | WO 2004/094927 A1 (LEYBOLD VAKUUM GMBH [DE]; HAEFNER HANS-ULRICH [DE]; SCHNACKE ERNST [DE] 4. November 2004 (2004-11-04) * das ganze Dokument * * ----- | 1-15 | |
| A | WO 2009/103106 A2 (SCHWEIGHOFER FRANZ [AT]; EGARTNER ALBERT [AT]) 27. August 2009 (2009-08-27) * das ganze Dokument * * ----- | 1-15 | RECHERCHIERTE SACHGEBIETE (IPC) F28D |
| A | WO 2008/108870 A1 (UNIV CITY [US]; SHINNAR REUEL [US]) 12. September 2008 (2008-09-12) * das ganze Dokument * * ----- | 1-15 | |

Der vorliegende Recherchenbericht wurde für alle Patentansprüche erstellt

| Recherchenort | Abschlußdatum der Recherche | Prüfer |
|---|---|---|
| München | 30. April 2012 | Bain, David |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 18 4256

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-04-2012

| Im Recherchenbericht angeführtes Patentdokument | Datum der Veröffentlichung | Mitglied(er) der Patentfamilie | Datum der Veröffentlichung |
|---|---|---|---|
| WO 2008154455 A2 | 18-12-2008 | US 2009090109 A1<br>WO 2008154455 A2 | 09-04-2009<br>18-12-2008 |
| WO 0169155 A2 | 20-09-2001 | AU 5217501 A<br>AU 2001252175 B2<br>MX PA02008922 A<br>US 6631754 B1<br>WO 0169155 A2 | 24-09-2001<br>19-08-2004<br>15-10-2004<br>14-10-2003<br>20-09-2001 |
| WO 2004094927 A1 | 04-11-2004 | CN 1777782 A<br>DE 10318510 A1<br>EP 1616137 A1<br>JP 2006524307 A<br>KR 20050113675 A<br>US 2006201163 A1<br>WO 2004094927 A1 | 24-05-2006<br>11-11-2004<br>18-01-2006<br>26-10-2006<br>02-12-2005<br>14-09-2006<br>04-11-2004 |
| WO 2009103106 A2 | 27-08-2009 | AT 506477 A1<br>EP 2247906 A2<br>WO 2009103106 A2 | 15-09-2009<br>10-11-2010<br>27-08-2009 |
| WO 2008108870 A1 | 12-09-2008 | AU 2007348242 A1<br>EP 2126481 A1<br>US 2010176602 A1<br>US 2011277471 A1<br>WO 2008108870 A1 | 12-09-2008<br>02-12-2009<br>15-07-2010<br>17-11-2011<br>12-09-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1857614 A2
- WO 2010060524 A1